(19) **Europäisches Patentamt / European Patent Office / Office européen des brevets**

(11) **EP 3 577 800 B1**

(12) **EUROPEAN PATENT SPECIFICATION**

(45) Date of publication and mention
of the grant of the patent:
**27.04.2022 Bulletin 2022/17**

(21) Application number: **18701934.4**

(22) Date of filing: **22.01.2018**

(51) International Patent Classification (IPC):
**H04B 17/17** $^{(2015.01)}$      **G01R 27/06** $^{(2006.01)}$

(52) Cooperative Patent Classification (CPC):
**H04B 17/17; H04B 17/103; H04B 17/18**

(86) International application number:
**PCT/IB2018/050377**

(87) International publication number:
**WO 2018/142237 (09.08.2018 Gazette 2018/32)**

(54) **MONITORING SYSTEM IN TRANSMITTING ANTENNAS**

ÜBERWACHUNGSSYSTEM IN SENDEANTENNEN

SYSTÈME DE SURVEILLANCE DANS DES ANTENNES ÉMETTRICES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2017 EP 17153871**

(43) Date of publication of application:
**11.12.2019 Bulletin 2019/50**

(73) Proprietor: **DAC System SA**
**6928 Manno (CH)**

(72) Inventors:
• **DELMASTRO, Paolo**
  **20020 Lainate (IT)**
• **WÜRSCH, Christoph**
  **9470 Werdenberg (CH)**
• **WEITNAUER, Adrian**
  **8752 Näfels (CH)**

(74) Representative: **P&TS SA (AG, Ltd.)**
**Avenue J.-J. Rousseau 4**
**P.O. Box 2848**
**2001 Neuchâtel (CH)**

(56) References cited:
**US-A1- 2013 245 976      US-A1- 2015 118 981**
**US-B1- 8 410 786**

**Description**

Field of the invention

The present invention relates in general to the field of antennas, and more particularly to a system for monitoring a transmission line between a signal source and an antenna transmitting radio and mobile network signals. The invention is especially suitable for monitoring high-power installations, such as transmission towers broadcasting television and radio signals. However, it is not limited to such applications.

Description of related art

Towers used for the distribution of television, radio, mobile phone and wireless network signals are composed of a plurality of antennas that have the function of transmitting the signals in a certain geographical area.
Malfunctions and failures can occur in broadcast towers due to several causes, among which:

- Lightning hitting the tower;
- Performance degradation caused by the aging of components of the tower;
- Malfunctioning caused by tampering.

In order to repair the tower technical team must be sent to the tower itself, analyse the failure, identify the component that has failed and fix it. This requires a long time, and the costs associated to each failure are considerable, in particular for towers of difficult access. It is also possible that one antenna does not work, but this is not detected because the failure is masked by other antennas positioned near the failed one: in this case, the television signal is not spread optimally.
GB2346292 describes a monitoring system in a cell transmitter for a mobile phone network, which includes measuring and monitoring the VSWR at several points along the lines feeding the radio signal to the antennas.
WO2016046600 discloses a failure detection and monitoring system for a plurality of transmitting antennas of television or radio signals including a plurality of directional couplers configured to measure the VSWR or the reflected power at various points along the antennas' feed lines, and transmitting the measured values to a concentrator, which is installed on the tower, and is in communication with a processing module, that can generate diagnostic data and/or failure signals.
US2013/245976A1 describes a VSWR measurements apparatus with a correlation unit. US2015/118981A1 discloses another VSWR apparatus for a transmitter. US8410786 B1 describes a distance to PIM measurement system,
**[0008]** Although the Standing Wave Ratio (SWR or VSWR) is often a reliable indicator of the health state of a broadcast installation, there is a need for monitoring systems that are more reliable and sensitive and are capable of detecting malfunctioning earlier than conventional systems.

Brief summary of the invention

The present invention proposes a new approach for phase detection on transmitting antennas, consisting in a solution that allows a real time monitoring of phase distribution across the different feeder branches in a complex transmission system, composed with multiple antenna elements. Accurate detection of signal phase is critical for the evaluation of the system health as well as for revealing of degradations of network performance due to deformation of radiation patterns. Importantly, the approach is that it is intended for real time, in-service detection and makes use of extremely simple electronics, allowing long term outdoor operation on transmitting antennas. Without the need of local oscillators, PLL's and critical circuitry, the system is based on multiple, simple, highly reliable amplitude detectors, properly spaced in order to exploit the vector relations between forward and reflected waves in the transmission lines. A recursive algorithm converges to an accurate result, partially compensating the measurement errors due to components and manufacturing tolerances. Furthermore, knowing the phase relation between incident and reflected waves it is possible to increase the accuracy of Return Loss measurements, overcoming the limitations introduced by the finite directivity of directional couplers. This document presents the experimental results obtained in UHF band, starting with CW signals and then with single carrier modulated signals in FM and UHF (DTV 8MHz) ranges. Finally, application to multicarrier systems is considered from a theoretical standpoint, considering the complication introduced by the spread distribution of frequency components as well as the meaning of phase detection for a multicarrier system.
According to the invention, these aims are achieved by means of the object of the main claim.

Brief Description of the Drawings

The invention will be better understood with the aid of the description of an embodiment given by way of example and illustrated by the figures, in which:

Fig. 1 shows schematically a failure detection system of antennas transmitting Television and/or radio signals of known type.

Figure 2 shows schematically a phase measurement device according to an aspect of the present invention.

Figures 3 and 4 show the vector amplitudes of direct and reflected waves at the couplers S2/S3, S5/S6, S8/S9 of the phase measurement device.

Figures 5 and 6 illustrate the determination of the phase angle a.

Figure 7 illustrates schematically an iterative process determining the phase angle a.

Figure 8 illustrates schematically a variant of the invention including a digital receiver and a digital modulator.

Figure 9 illustrates schematically a variant of the invention with a master detector and a plurality of slave unit, the master detector generating a monitor signal and the salve unit responding with a coherent signal.

Figure 10 Illustrates a variant of the invention that evaluates the electrical length of the line by injecting a variable frequency signal.

Detailed Description of possible embodiments of the Invention

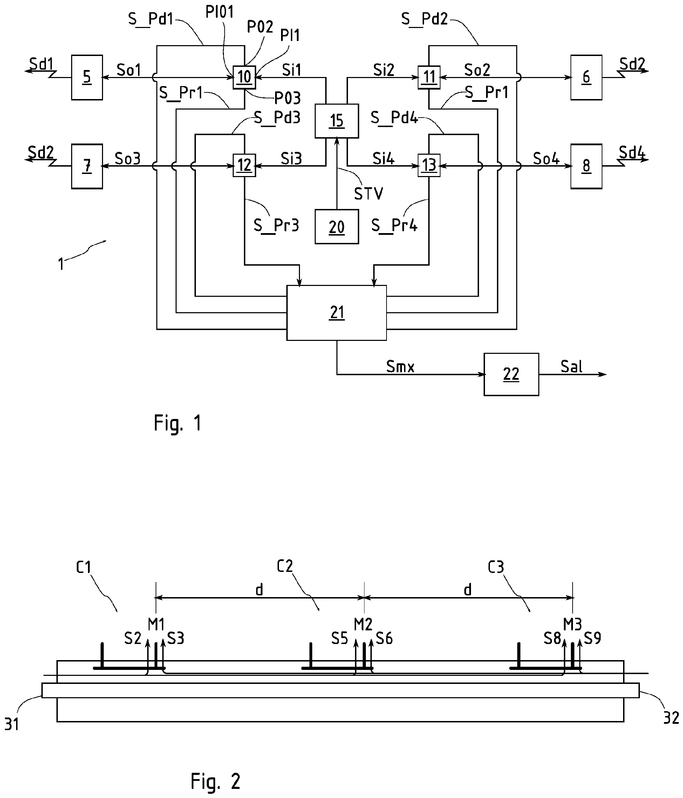

With reference to the Figure 1, it is shown a failure detection system 1 of antennas that transmit television/radio/mobile phone/network signals of known type.

The detection system includes:

- a source 20 of television and / or radio signal;
- a power divider 15;
- four directional couplers 10, 11, 12, 13;
- four transmitting antennas 5, 6, 7, 8;
- a concentrator signal 21;
- a processing module 22.

The detection system 1 is positioned partly on a broadcast tower of television signal to an elevated height, for instance to at least 80 meters; the broadcast tower of television signal is opportunely positioned in select geographical sites (typically, on a mountain) so that to cover an wide geographical area as possible and therefore to serve the greatest number of users. Particularly, the processing module 22 and the source 20 are positioned in a closed structure positioned on the ground next to the broadcast tower of television signal, while the power divider 15, the directional couplers 10, 11, 12, 13, the transmitting antennas 5, 6, 7, 8 and the signal concentrator 21 are positioned on the broadcast tower of television signal, to a height at least equal to 80 meters.

The source 20 is such as to generate, a STV signal, television and/or radio-type. For example, the television signal is digital terrestrial type and occupies the frequency bands VHF-type (170 MHz and 250 MHz) or UHF-type (between 250 MHz and 900 MHz), while the radio signal occupies the frequency band FM-type (ranging from 87.5 MHz and 108 MHz). Mobile phone and data networks occupy several frequency bands up to 2700 MHz. The invention is not restricted to a particular frequency band, however, and although the following will refer only to the television signal, for simplicity, similar considerations are applicable in the case of all signals.

The power divider 15 is a passive device that includes an input port and four output ports. The input port of the power divider 15 is connected with the signal source 20 and the four output ports are connected respectively with the four directional couplers 10, 11, 12, 13. In particular, the power divider is such to receive the STV broadcast signal and is such as to generate, in function of this, a first television input signal $Si1$, a second television input signal $Si2$, a third television input signal $Si3$, a quarter television input signal $Si4$. Each of the four television input signals $Si1$, $Si2$, $Si3$, $Si4$ is also a television-type signal that is equal to the STV television signal, but has a lower power level, in particular a fraction of the power of the STV television signal. The power levels of the four television input signals $Si1$, $Si2$, $Si3$, $Si4$

may be the same between them or different; for example, in the first case each of the television input signals Si1, Si2, Si3, Si4 has a power level that is a quarter of the power level of the STV television signal.

Each of the directional couplers 10, 11, 12, 13 has an input port connected with the power divider 15, an input port / output connected with a respective antenna 5, 6, 7, 8 and two output ports associated with the signal concentrator 21. Each of the directional couplers 10, 11, 12, 13 has the function to take a portion of the received power on the input port and a part of the power received on the input / output port: this allows to monitor the forward and reflected power present on the respective coaxial feed lines connected to the antennas 5, 6, 7, 8, in order to detect and identify a degradation or a failure of the antennas 5, 6, 7, 8, a failure of the connection cables between the antennas 5, 6, 7, 8 and the respective directional couplers 10, 11, 12, 13 or a failure of the power divider 15, as will be explained more in detail hereinafter. More particularly, each of the directional couplers 10, 11, 12, 13 is such as to couple the signal received on the input port with the signal transmitted on the input / output port and transmitted on the first output port; Furthermore, each of the directional couplers 10, 11, 12, 13 is such as to couple the received signal on the input / output port with the transmitted signal on the second output port.

With reference to the first directional coupler 10, it includes the input port PI1 to receive in input the first television input signal Si1 and includes an input / output port PIO1 to generate as output a first television output signal So1 equal to the first television input signal Si1, with a power level slightly lower due to a small attenuation that undergoes the television signal between the input port PI1 and the input port / output PIO1. Moreover, the input / output port PIO1 is such as to receive the reflected signal from the first antenna 5, as will be explained more in detail hereinafter. The first directional coupler 10 further includes a first power sensor for measuring the first direct power Pd1 transmitted toward the antenna 5 and generate a first analogue voltage signal S_Pd1 indicative of the value of the first direct power Pd1: in case the first power sensor detects that the value of the first direct power Pd1 is lower than a first reference value, this means that a failure has occurred at a point precedent to the first power sensor 40, such as a failure of the divider power 15 or of the connection cable between the power divider 15 and the first directional coupler 10 or source 20 for example, in case of absence of failure the value of the first direct power Pd1 is equal to 3000 W.

The first directional coupler 10 further includes a second power sensor to measure the first reflected power Pr1 which is reflected by the antenna 5 and generate a second analogue voltage signal S_Pr1 indicative of the value of the first reflected power Pr1: in the case in which the second power sensor detects that the value of the first reflected power Pr1 is greater than a second reference value, this means that a failure has occurred at a point next to the second power sensor, such as a failure of the antenna 5 or the connection cable between the first directional coupler 10 and the antenna 5. For example, in case of absence of failure the value of the first reflected power Pr1 is equal to 200 W. It is well known that a part of the power associated to the first television input signal Si1 is actually radiated by the antenna 5 as transmitted electromagnetic field carrying a first input television signal Sd1: the power associated with the first input television signal Si1 will be indicated later with "direct power Pd1. "A part (lower) of the power transmitted from the first input television signal Si1 is instead reflected back from the antenna due to the mismatch between the impedance of the supply line to the antenna 5 and the impedance of the antenna 5: this part will be shown later with "reflected power Pr1.

The above considerations relating to the first directional coupler 10 can be made in a similar way to the second directional coupler 11, the third directional coupler 12 and the fourth directional coupler 13. In particular, the second directional coupler 11 is such as to receive in input the second television signal input Si2 and is such as to generate as output a second output television signal So2 obtained from the second television input signal Si2; also the second directional coupler 11 includes a first power sensor for measuring the second direct power Pd2 transmitted towards the antenna 6 and includes a second power sensor for measuring the second reflected power Pr2 that is reflected from the antenna 6. The third directional coupler 12 is such as to receive in input the third input television signal Si3 and is such as to generate as output a third output television signal So3 obtained from the third input television signal Si3; also the third directional coupler 12 includes a first power sensor for measuring the third direct power Pd3 transmitted towards the antenna 7 and includes a second power sensor for measuring the third reflected power Pr3 that is reflected from the antenna 7. The fourth directional coupler 13 is such as to receive in input the fourth input television signal Si4 and is such as to generate as output a fourth output television signal So4 obtained from the fourth television input signal Si4; also the fourth directional coupler includes a first power sensor for measuring the direct fourth power Pd4 transmitted to the antenna 8 and includes a second power sensor for measuring the fourth reflected power Pr4 that is reflected from the antenna 8.

The first transmitting antenna 5 is connected with the first directional coupler 10, is such as to receive the first output television signal So1 and, in function of it, is such as to radiate an electromagnetic wave that carries a first broadcast television signal Sd1.

Similarly, the second transmitting antenna 6 is connected with the second directional coupler 11, is such as to receive the second output television signal So2 and, in function of it, is such as to radiate electromagnetic wave that carries a second broadcast television signal Sd2. The third transmitting antenna 7 is connected with the third directional coupler 12, is such as to receive the third television output signal So3 and, in function of it, is such as to radiate an electromagnetic wave carrying a third broadcast television signal Sd3. The fourth transmitting antenna 8 is connected with the fourth directional coupler 13, is such as to receive the fourth output television signal So4 and, in function of it, is such as to radiate electromagnetic wave that carries a fourth broadcast television signal Sd4. The signal concentrator 21 is connected with the four directional couplers 10, 11, 12, 13 and has the function of collecting the analogue voltage signals generated by the power sensors placed inside of the four directional couplers 10, 11, 12, 13. Signal concentrator 21 has also the function to perform a conversion of the analogue voltage signals from analogue to digital. In particular, the concentrator signal 21 is such as to receive the analogue voltage signals indicative of the values of the direct powers Pd1, Pd2, Pd3, Pd4 and reflected powers Pr1, Pr2, Pr3, Pr4 and, in function of them, is arranged to generate a multiplexed digital signal Smx that carries digital values indicative of the direct power Pd1, Pd2, Pd3, Pd4 and reflected powers Pr1, Pr2, Pr3, Pr4.

The processing module 22 is such as to receive the digital signal multiplexed Smx that carries the digital values indicative of the direct powers Pd1, Pd2, Pd3, Pd4 and reflected powers Pr1, Pr2, Pr3, Pr4, is arranged to compare the digital values indicative of the direct powers Pd1, Pd2, Pd3, Pd4 and reflected powers Pr1, Pr2, Pr3, Pr4 with respective reference values. Where one or more digital indicative values of the direct powers Pd1, Pd2, Pd3, PD4 are lower than the respective reference values or in the case that one or more digital indicative values of the reflected powers Pr1, Pr2, Pr3, Pr4 are greater than their respective reference values, the processing module 22 is arranged to generate an alarm signal Ps indicative of a failure of one or more between the antennas 5, 6, 7, 8 or a failure of one or more connection cables between the antennas 5, 6, 7, 8 and the respective sensors 5, 6, 8, or failure of the source 20 or a failure of the power divider 15. The processing module 22 includes a memory for storing the reference values of the direct powers Pd1, Pd2, Pd3, Pd4 and reflected powers Pr1, Pr2, Pr3, Pr4.

As illustrated in figure 2, an aspect of the present invention is a device measuring the electric phase of the signal that be employed in the fault detection system of figure 1, or in other antenna monitoring systems. The device includes at least three couplers C1, C2, C3 along the feed line. Each of the couplers can be a conventional directional coupler, for example having a short line coupled to the main feed line and terminated at both extremities. Other forms of couplers are however possible.

It is not essential that the couplers have high directivity or isolation, and the invention can perform its duty also when the directivity is moderate, to the level that the incident wave coupled into the isolated port is higher than the reflected wave component. Low-directivity couplers may indeed be appropriate for some installations.

The three couplers will yield three signals at their isolated ports: M1=S2+S3, M2=S5+S6, M3=S8+S9. Each of these signals will have a component deriving from the directed wave, and one from the reflected wave. Since the couplers C1, C2, C3 are spaced, these components will be different in relation with the signal's wavelength, as it will be clear later. In the following, to fix the ideas, we have supposed that the three couplers are spaced at a distance d approximately $\lambda/6$ from each other, but this is not an essential feature of the invention. The algorithm that extracts the phase $\alpha$ could be adapted to a different spacing.

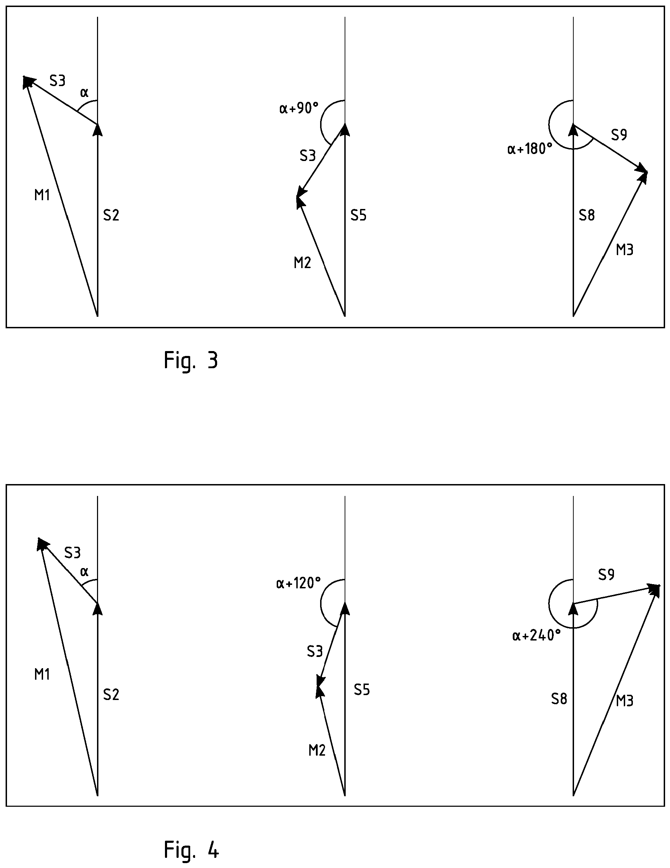

Figure 3 illustrates how the signals S2/S3, S5/S6, S8/S9 add together at each coupler. The direct and reflected waves are represented as vectors and, insofar as the distance between the couplers and the antenna remain constant, their relative angles are constant, at a given frequency. Due to the symmetry of the structure and with good approximation we can assume that S2 = S5 = S8, and |S3|=|S6|=|S9|. In the drawing, the reflected components are rotated in phase by a, $\alpha$+120°, a+240°, since 120° corresponds to the $\lambda/6$ coupler spacing, and $\alpha$ is twice the phase rotation of the reflected wave, otherwise said, the phase rotation of the signal in the two-way path from the sensor to the antenna and back (modulo 360°). Different spacing would clearly give rise to different phase shifts so, if the bandwidth of the system is reasonably broad and the couplers are spaced such that their distance corresponds to 120° in the middle of the UHF band, phase determination will be possible across the whole UHF range.

In a variant, illustrated in figure 4, the spacing d between the couplers C1, C2, C3 is approximately $\lambda/8$, and the reflected components S3, S6, S9 are rotated by a, a+90°, respectively $\alpha$+180°. For a generic spacing d, the same angles would be a, $\alpha$+k, $\alpha + 2k$, where $k=360° d / \lambda$.

Trigonometry allows expressing the relationship between the vectors with two parameters, or unknown: $\alpha$ and |S3|. Importantly, |S3| is related to return loss, while the angle $\alpha$ depends from the electrical distance from the array of couplers C1, C2, C3 and the antenna, and is a sensitive indicator of the health status of the transmission line.

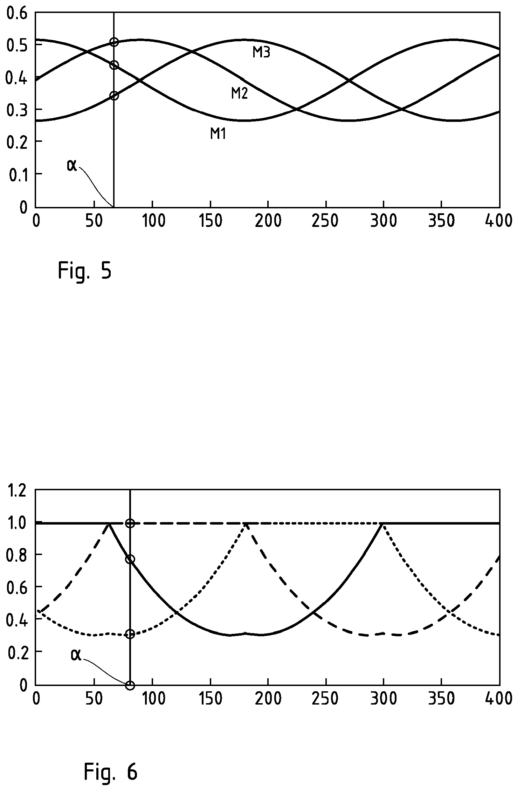

Figure 5 shows the amplitudes M1-M3 as a function of the angle $\alpha$ for a given value of return loss (i.e. a given value of |S3|):

$$|M1| = \sqrt{[|S2| + |S3| \cos \alpha]^2 + |S3|^2 \sin^2 \alpha} \qquad (1)$$

$$|M2| = \sqrt{[|S5| + |S6| \cos(\alpha - k)]^2 + |S6|^2 \sin^2(\alpha - k)} \qquad (2)$$

$$|M3| = \sqrt{[|S8| + |S9| \cos(\alpha - 2k)]^2 + |S9|^2 \sin^2(\alpha - 2k)} \qquad (3)$$

$$|S2| = |S5| = |S8| \qquad (4)$$

$$|S3| = |S6| = |S9| \qquad (5)$$

replacing (4) and (5) into (1), (2) and (3):

$$|M1|^2 = |S2|^2 + |S3|^2 \cos^2 \alpha + 2|S2||S3| \cos \alpha + |S3|^2 \sin^2 \alpha \qquad (6)$$

$$|M2|^2 = |S2|^2 + |S3|^2 \cos^2(\alpha + k) + 2|S2||S3| \cos(\alpha - k) + |S3|^2 \sin^2(\alpha - k) \quad (7)$$

$$|M3|^2 = |S2|^2 + |S3|^2 \cos^2(\alpha + 2k) + 2|S2||S3| \cos(\alpha - 2k) + |S3|^2 \sin^2(\alpha - 2k) \quad (8)$$

simplifying:

$$|M1|^2 = |S2|^2 + |S3|^2 + 2|S2||S3| \cos \alpha \qquad (9)$$

$$|M2|^2 = |S2|^2 + |S3|^2 + 2|S2||S3| \cos(\alpha - k) \qquad (10)$$

$$|M3|^2 = |S2|^2 + |S3|^2 + 2|S2||S3| \cos(\alpha - 2k) \qquad (11)$$

Equations (9), (10) and (11) express the three measurements obained from the three in-line probes as function of four parameters:

- $\alpha$ is the main unknown of the problem.
- $|S2|$ is intrinsically dependent from the sensor characteristics, specifically the directivity (D). In this calculation we assumed that all the three sensors are identical and therefore with the same D
- $|S3|$ depends only on the Return Loss of all the lines, splitters and antenna connected at the output of the sensor.
- $k=360° d / \lambda$ is determined by the electrical distance d between the probes

Given a set of values for $|S2|$, $|S3|$ and k, it is possible to plot a 2-D chart representing the relation between M1, M2, M3 and $\alpha$.

Figure 5 plots $|M1|^2$, $|M2|^2$, and $|M3|^2$ as a function of a, calculated for an arrangement of three detectors separated by $d= \lambda/8$ (cf. figure 3), under realistic assumptions on the values of antenna return loss and coupler directivity. The three plots are proportional to the power levels that are present and measurable at the outputs of sensors C1, C2, and C3. It is possible to determine the unique value of the angle $\alpha$ that matches the observed amplitudes with the expected curves. This provides an estimation of the phase angle a. Once a is known, it is possible to estimate $|S3|$: the antenna RL "cleaned" from the error introduced by the coupler's directivity.

Figure 6 plots normalized amplitudes NM1($\alpha$), NM2($\alpha$), NM3($\alpha$) defined by

$$NM1(\alpha) = \frac{|M1(\alpha)|^2}{\max(|M1(\alpha)|^2, |M2(\alpha)|^2, |M3(\alpha)|^2)} \qquad (12)$$

$$NM2(\alpha) = \frac{|M2(\alpha)|^2}{\max(|M1(\alpha)|^2, |M2(\alpha)|^2, |M3(\alpha)|^2)} \qquad (13)$$

$$NM3(\alpha) = \frac{|M3(\alpha)|^2}{\max(|M1(\alpha)|^2, |M2(\alpha)|^2, |M3(\alpha)|^2)} \qquad (14)$$

as a function of the angle a, again assuming a given value of return loss (i.e. a given value of |S3|) and directivity in a device according to the invention for which d = $\lambda$/6. As above, the three values M1, M2, M3 yield a unique value of the angle a.

In reality, due to tolerances of components and measurement errors, the three points will not fit exactly on the plots. Then, it is necessary to evaluate the distance of the three samples and the ideal positions in the plot, for each value of a. The value of $\alpha$ that minimizes the MSE (Mean Squared Error) will be divided by 2 and the result can assumed to be the best estimation of the phase rotation from the sensor input to the antenna interface.

In a possible implementation, the algorithm could proceed as follows:

1. Measure the absolute values of values M1, M2, M3

2. compute the normalized values NM1, NM2, NM3 as function of the angle a.

3. find the value of $\alpha$ that minimizes the mean squared error MSE($\alpha$) defined by:

$$MSE(\alpha) = (NM1 - NM1(\alpha))^2 + (NM2 - NM2(\alpha))^2 + (NM3 - NM3(\alpha))^2 \qquad (15)$$

4. The phase rotation from sensor input to the antenna interface is given by the value of $\alpha$ that minimizes the error, divided by 2.

$$r = \frac{1}{2} \arg\min MSE(\alpha) \qquad (16)$$

The minimum of MSE can be obtained by any minimization algorithm. Including, in an exemplary implementation, a straight search among the values MSE(a) for all the integer values from $\alpha$=0° to $\alpha$=360°.

The value of phase resulting from this algorithm is based on some assumptions that in principle cannot be precisely known at the measurement's instant. Directivity of the sensor is reasonably predictable, but the Return Loss value is by definition a variable with time and health conditions of the antenna and lines. Although a very detailed measurement is possible during the commissioning of the system, the initial conditions cannot be taken as a constant. This means that in principle the value of |S3| used in this algorithm cannot be considered accurate, but simply an initial approximation that brings an error in the procedure

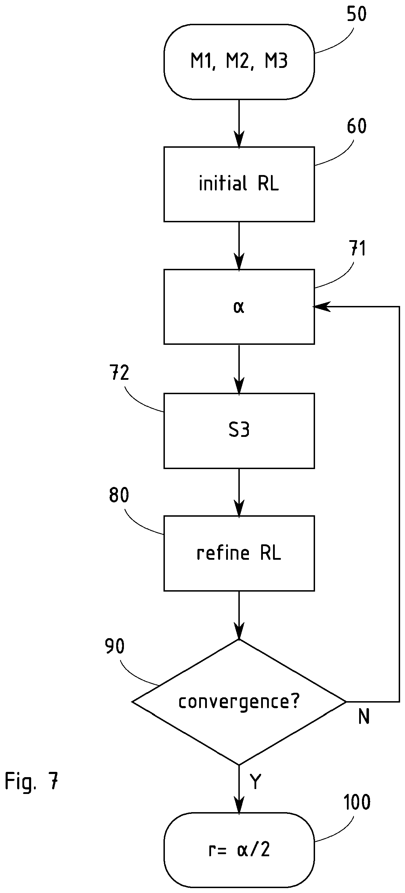

Uncertainties in the return loss, as well as other sources of error, can be estimated and corrected by an iterative algorithm, as described in the following, with reference to the figure 7. Initially (step 50) the power levels M1, M2, M3 are measured at the outputs of the directional couplers C1, C2, C3 then, an initial assumed value of RL value is determined (step 60) the initial assumption on RL can be obtained in any conceivable way: for example by a sensor of suitable directivity, by guessing, or from prior knowledge. The inventor have found that the initial value is not critical, provided it is not grossly wrong.

In step 71, a current value of $\alpha$ is obtained from the theoretical expressions of M1($\alpha$), M2($\alpha$), M3($\alpha$), or NM1($\alpha$), NM2($\alpha$), NM3($\alpha$) as sketched above. In this step, the system works under the assumption that the assumed value for the return losses is correct. In step 72, a current value of S3 is obtained by substituting the current value of $\alpha$ into equation (9) and solving it for S3, then, in step 80, the value of S3 is used to compute a refined value of the return losses RL.

Step 90 is a convergence test that decides whether the iterative method has approximated a solution, or should be allowed to continue. In the first case, the iteration are stopped and the rotation angle r is computed as half of the current value for a, otherwise, the process returns to step 71 for another iteration. Convergence can be ascertained in any known way including, in a simple case, simply counting the iterations up to a predetermined number. Simulations have proved that this method converges quickly and provides refined values of $\alpha$ and |S3| at each iteration step. The return loss value, besides being instrumental in the computation of a, is an important parameter in its own right and can be monitored and used together with the phase shift to determine a health status of the antenna.

The method of the invention provides the phase rotation $\alpha$ of the signal in the two-way path from the sensor to the antenna and back, but it does not give any information on the number of wavelength covered by the path. In other words, given a value of a, the length of the cable will be given by:

$$L = \frac{1}{2}\frac{\lambda}{360°}(N \cdot 360° + \alpha) \qquad (17)$$

where N is an unknown integer. Since the distance between the sensor and the antenna in in general larger than one wavelength, the method cannot measure the absolute electrical length of the cable. Nevertheless, it provides a measurement of the variation of the electrical length, which can be used in relative comparison of multiple cables of similar length. Alternatively, since the physical length and propagation constant of the cable are known at commissioning, N can be determined in advance.

The electrical distance k between the probes depends from the physical distance (a constant) and the frequency of operation. It is not realistic to develop a device where k is optimized on the frequency, so it is important to evaluate the effect of a frequency change on the previous algorithm. This can be properly investigated by simulations, which indicate that moderate changes in the frequency don't degrade the performance of the phase measurement method of the invention.

All the procedures described above apply to a CW signal and it is important to consider to what extent they are applicable to modulated signals. For usual values of modulation level, it is expected that the procedure maintains its value. In fact, a DTV signal in the lower part of UHF range has a bandwidth, in percentage, expressed as ratio between the spectrum width and the centre frequency, lower than 2%.

In presence of multiple channel on the same coaxial line, the spectral components can distribute over a wide range, from lowest to highest parts of UHF range, introducing a next level of complexity. The algorithm can also be adapted to account for the modulation bandwidth and the interferences of neighbouring channels. These could also be alleviated by suitable filters.

The processing unit of the invention could also be arranged to determine the parameter $\alpha$ at two or several frequencies in the signal band, or for a determined region of the spectrum, determining the required frequency components of the M1, M2, M3 and applying the above computation using, for each frequency, the appropriate value of $\lambda$.

Importantly, the phase measurement of the invention is based only on amplitude measurements, and does not rely on local oscillators or phase references. Thanks to this, it is robust to interferences and is suitable to installation in high-power broadcast towers. The length of the device is dictated by the wavelength, and is fairly reasonable for VHF, UHF and higher frequencies.

In an alternative embodiment, the modulation is exploited to determine the transmission delay, or equivalently the electrical phase, between a sensor on the transmission line and the antenna interface by a correlation operation. Digital-modulated video signals, for example DVB signals, lend themselves to this kind of processing.

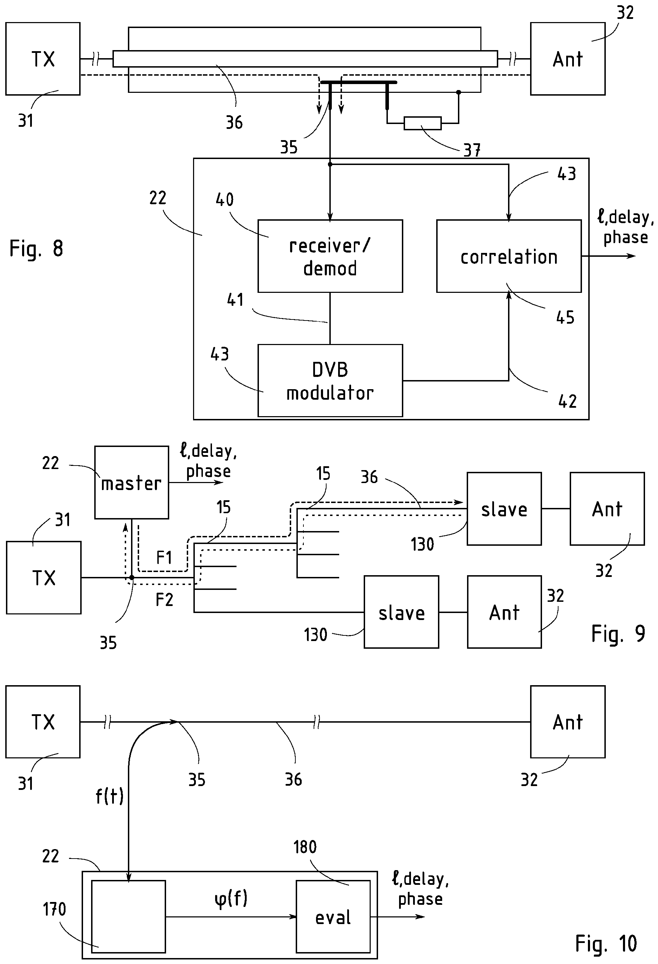

Figure 8 is a simplified diagram of a phase detector that determines a delay and/or a phase difference, by correlation of a digitallymodulated signal. In the example the phase detector is inserted along a transmission line 36 connecting a transmitter 31 with a radiating element 32. The signal is sampled, for example, at one port of a directional coupler35, the other port is terminated on a characteristic impedance 37. Importantly, the signal at the coupler 35 will be a superposition of the signal reflected from the antenna with the direct signal from the transmitter. The digital demodulator 40 receives the DVB signal and generates a digital stream 41 (for example a MPEG-encoded data stream) that is synchronous with the strongest of the superposed input signals. We will assume that the demodulator synchronizes with the transmitter but, it is easy to see that the apparatus would function in the other case as well.

The digital signal is fed to a DVB modulator 42 that generates a replica DB modulated signal that is synchronous (modulo a processing delay that can be calibrated) with the signal generated from the transmitter, but is exempt from reflections. Even considering the reflection from the antenna and line discontinuities, the S/N ratio and multipath in the transmission line are vastly better than the typical values found in a radio propagation channels, and the reception, modulation, and demodulation can be considered free from errors.

The correlator unit 45 receives two signals: signal 42 is a replica of the transmitted signal and is denoted by s(t). The signal 43 will is a superposition of the transmitted signal with a delayed signal that is reflected from the antenna, plus a certain amount of unavoidable noise. normalizing the amplitudes and overlooking the processing delay, the received signal can be expressed as

$$r(t) = s(t) + a \cdot s(t - 2\tau) + n(t) \qquad (18)$$

where n(t) denotes the noise and $\tau$ the delay between the phase detector and the antenna. The correlator 45 is arranged to determine the value of $\tau$, indicated by a maximum of the correlation function of signals 42 and 43. The value of $\tau$ can be used to monitor the performance of the transmission line and antenna in its own right, or converted into the phase shift between the sensor and the antenna, for a determined carrier frequency.

According to another embodiment, the monitoring device of the invention injects a monitoring signal along the transmission line to determine its electrical length and/or its transmission delay, and or the phase shift at a determined frequency. A possible variant is schematically represented on figure 9, the delay, or phase shift, between determined points on the transmission line is computed by providing a master sensor and a slave sensor, the latter generating a signal that is retransmitted backwards along the transmission line.

In this variant, the phase shift is determined by a phase comparison following an exchange of signals between processing module 22 arranged as master sensor mounted near the transmitter, and one or several slave units 130 mounted directly at the antenna interface. The system may include several power splitters 15 and a plurality of antennas 32 equipped of slave unit, each cooperating with one common master sensor 22, as it will be shown in the following. A plurality of master sensors, operating in frequency multiplexing or time multiplexing could also be contemplated.

The master sensor 22 generates a monitoring signal at a frequency F1 and injects it on the transmission line 36 via the coupler 35. The slave sensors 130 receive the signal F1 and generate a coherent signal F2 at a frequency different from F1, but coherent in phase with F1. For example F2 could be in a predetermined rational or integer ratio with F1. F2 is transmitted back along the transmission line to the master sensor 22.

The master sensor includes a circuit identical or similar to that of the slave sensors 130 and can also generate a local F2L signal coherent with F1, in the same manner. This local F2L signal is not transmitted on the line but used to determine the phase shifts of the F2 signals received from the slave sensors 130.

The choice of F1 and F2 is preferably done in such a way to space these signals from the broadcast radio or TV signal, with reasonable losses. Preferably F1 is close enough to the frequency to the broadcast signals to provide meaningful information, but at the same time separate enough to avoid interference.

Suitable choices for UHF broadcast towers could be:
F1=900 MHz; F2=450 MHz.
A possible choice for a radio FM system could be:
F1=300 MHz, F2=150 MHz.
In any case the invention is not linked to a particular choice of frequencies, nor is it required that the frequencies be in an integer ratio.
The phase difference between F2 and F2L (denoted $\Delta\phi$) will depend from:

1. Uplink electrical length at frequency 1
2. Downlink electrical length at the frequency 2
3. Phase noise in the two signals F2 and F2L
4. Delay introduced by the sensor circuitry to generate F2
5. Delays and phase shifts introduced by circuitry in the Master Tx

The purpose of the measure may be not $\Delta\phi$ as absolute value, but possibly the differences $\Delta\phi 1 - \Delta\phi 2$ between the phase shifts of different radiating elements 32, because these are the values that determine the radiation pattern of a composite antenna.

All the items 1-5 can be evaluated and calibrated out with no or little effect on the accuracy. Items 4) are minimized by the fact that all sensors are identical and locking on the incoming F1 they will behave all the same. Items 3) are be mitigated by the fact that there is not a constraint in terms of measurement time and long measurements can be used to filter out the effect of jitter.

Once that the phase difference is known for frequency F1 it can be mathematically rescaled to extract the value at any other frequency in the antenna operating range.

Recalling the theory of propagation of a signal in a transmission line, reflection coefficient seen at the input of a transmission line is a complex number whose argument, or phase, is given by:

$$\varphi = -\frac{4\pi}{c_0} f \ell \qquad (19)$$

$$\frac{d\varphi}{df} = -\frac{4\pi}{c_0} \ell \qquad (20)$$

where $c_0$ denotes the characteristics signal velocity for the cable and $\ell$ the electrical length of the transmission line, which is directly related with the propagation delay of the line and with the phase shift introduced by the line at any given frequency.

According to another embodiment, schematically illustrated in figure 10, the length of the line and/or the phase shift introduced by the line at any given frequency is determined form the complex reflection coefficient at the input of the line, measured at different frequencies, based on the phase of the reflection coefficient at the input.

The monitoring device of the invention includes, in this variant, a detector unit 170 injecting a monitoring signal having a variable frequency in the transmission line 36 via a coupler 35 towards the radiating element 32. The signal is reflected at the antenna and propagates backwards to the detector unit 175, which is arranged to determine the phase reflection coefficient, in relation with the frequency. From that, an evaluation unit 180 (which could be a software) determines electrical length and/or delay and/or the phase shift at a given frequency of the line.

From equations (19) and (20), the phase of the reflected signal is linearly related with the frequency, with a slope that is proportional to the electric length. In an exemplary implementation, the electric length can be extracted injecting a signal having a linear ramp of frequency detecting the reflected phase for a large number of frequencies, and applying a linear fit to the unwrapped phase.

## Claims

1. A device for monitoring a transmission line that connects a signal source (20, 31) to an antenna (5, 6, 7, 8, 32), the device including three or more directional couplers (C1, C2, C3), at determined distances along the transmission line (36), and a processing unit (22), wherein the processing unit is sensitive to signal amplitudes present at least one port of each of the directional couplers (C1, C2, C3), and arranged to compute a phase shift (a) between a direct component of a signal on the transmission line and a reflected component of the signal on the transmission line at a predetermined position of the transmission line based on said signal amplitudes.

2. The device of the preceding claim, comprising three directional couplers (C1, C2, C3) equally spaced from one another.

3. The device of any one of the preceding claims, wherein the processing unit (22) is sensitive to signal amplitudes present at isolated ports of the directional couplers (C1, C2, C3).

4. The device of any of the preceding claims, wherein the processing unit is operatively arranged for: determining an initial value of return loss from the antenna, computing the phase shift (a) between the direct and reflected component at a predetermined position of the transmission line and a refined value of return loss, based on the amplitudes and on said initial value of return loss, iterating the computation of phase shift and return loss.

5. The device of claim 1, wherein the processing unit (22) is arranged to inject a monitoring signal having a first frequency (F1) in the transmission line (36), the device further comprising one or more than one slave units (130) arranged to generate a coherent signal having a second frequency (F2) different from the first frequency (F1) and transmitting it backwards along the transmission line to the processing unit (22).

6. The device of the preceding claim, wherein the processing unit (22) includes means to generate a local coherent signal having the second frequency (F2).

7. The device of claim 1 wherein the processing unit is arranged to inject a monitoring signal having a variable frequency (f(t)) in the transmission line (36), via a directional coupler (35), sense the phase reflection coefficient of the monitoring signal by the antenna (32) seen at the directional coupler (35) through which the monitoring signal is injected, computing the phase shift (a) between the direct and reflected component at the position of the directional coupler (35) through which the monitoring signal is injected, and/or an electrical length of the transmission line, and/or a delay of the transmission line, based on a complex argument of the phase reflection coefficient.

## Patentansprüche

1. Vorrichtung zur Überwachung einer Übertragungsstrecke, die eine Signalquelle (20, 31) mit einer Antenne (5, 6, 7, 8, 32) verbindet, die Vorrichtung umfassend:

   drei oder mehr Richtungskoppler (C1, C2, C3), die in festgelegten Abständen entlang der Übertragungsstrecke (36) angeordnet sind, und
   eine Verarbeitungseinrichtung (22), wobei die Verarbeitungseinrichtung für Signalamplituden empfänglich ist, die an mindestens einem Anschluss jedes der Richtungskoppler (C1, C2, C3) anliegen, und dazu ausgebildet ist, eine Phasenverschiebung (a) zwischen einer unmittelbaren Komponente eines Signals auf der Übertragungsstrecke und einer reflektierten Komponente des Signals auf der Übertragungsstrecke an einer vorgegebenen Position der Übertragungsstrecke auf der Grundlage der Signalamplituden zu berechnen.

2. Vorrichtung nach dem vorhergehenden Anspruch, umfassend drei gleich voneinander beabstandete Richtungskoppler (C1, C2, C3).

3. Vorrichtung nach einem der vorhergehenden Ansprüche, wobei die Verarbeitungseinrichtung (22) für Signalamplituden empfänglich ist, die an isolierten Anschlüssen der Richtungskoppler (C1, C2, C3) anliegen.

4. Vorrichtung nach einem der vorhergehenden Ansprüche, wobei die Verarbeitungseinrichtung funktionsmäßig ausgebildet ist, um: einen Anfangswert der Reflexionsdämpfung der Antenne zu bestimmen, die Phasenverschiebung (a) zwischen der unmittelbaren und der reflektierten Komponente an einer vorbestimmten Position der Übertragungsstrecke und einen verbesserten Wert der Reflexionsdämpfung auf der Grundlage der Amplituden und des Anfangswertes der Reflexionsdämpfung zu berechnen, die Berechnung der Phasenverschiebung und der Reflexionsdämpfung zu wiederholen.

5. Vorrichtung nach Anspruch 1, wobei die Verarbeitungseinrichtung (22) dazu ausgebildet ist, ein Überwachungssignal mit einer ersten Frequenz (F1) in die Übertragungsstrecke (36) einzukoppeln, wobei die Vorrichtung ferner eine oder mehr als eine Nebeneinrichtung (130) umfasst, die dazu ausgebildet ist, ein kohärentes Signal mit einer zweiten Frequenz (F2), die sich von der ersten Frequenz (F1) unterscheidet, zu erzeugen und es entlang der Übertragungsstrecke zurück zur Verarbeitungseinrichtung (22) zu übertragen.

6. Vorrichtung nach dem vorangegangenen Anspruch, wobei die Verarbeitungseinrichtung (22) Mittel zur Erzeugung eines örtlichen kohärenten Signals mit der zweiten Frequenz (F2) enthält.

7. Vorrichtung nach Anspruch 1, wobei die Verarbeitungseinrichtung dazu ausgebildet ist, ein Überwachungssignal mit einer variablen Frequenz (f(t)) über einen Richtungskoppler (35) in die Übertragungsstrecke (36) einzuspeisen, den Phasenreflexionskoeffizienten des Überwachungssignals anliegend am Richtungskoppler (35), der durch die Antenne (32), durch die das Überwachungssignal eingespeist wird, zu erfassen, Berechnen der Phasenverschiebung (a) zwischen der unmittelbaren und der reflektierten Komponente an dem Standort des Richtungskopplers (35), durch den das Überwachungssignal eingespeist wird, und/oder einer elektrischen Länge der Übertragungsstrecke, und/oder einer Verzögerung der Übertragungsstrecke, basierend auf einem komplexen Argument des Phasenreflexionskoeffizienten.

**Revendications**

1. Dispositif pour le monitorage d'une ligne de transmission connectant une source de signal (20, 31) à une antenne (5, 6, 7, 8, 32), le dispositif comprenant trois ou plus coupleurs directionnels (C1, C2, C3), à des distances prédéterminées le long de la ligne de transmission (36), et une unité de élaboration (22), dans lequel l'unité de élaboration reçoit les amplitudes des signaux présents à au moins un port de chacun des coupleurs directionnels (C1, C2, C3), et est configurée pour calculer un décalage de phase (a) entre une composante directe d'un signal sur la ligne de transmission et une composante réfléchie du signal sur la ligne de transmission à une position déterminée de la ligne de transmission se basant sur les dites amplitudes des signaux.

2. Le dispositif de la revendication précédente, comprenant trois coupleurs directionnels (C1, C2, C3) également espacés entre eux.

3. Le dispositif de l'une quelconque des revendications précédentes, dans lequel l'unité d'élaboration (22) reçoit des amplitudes de signaux présent à des ports isolés des coupleurs directionnels (C1, C2, C3).

4. Le dispositif de l'une quelconque des revendications précédentes, dans lequel l'unité d'élaboration est configurée opératoirement pour : déterminer une valeur initiale de l'atténuation des réflexions de l'antenne, déterminer le décalage de phase (a) entre une composante directe et une composante réfléchie à une position déterminée de la ligne de transmission se basant sur les amplitudes et sur la dite valeur initiale de l'atténuation des réflexions de l'antenne, réitérer le calcul du décalage de phase et de l'atténuation des réflexions.

5. Le dispositif de la revendication 1, dans lequel l'unité d'élaboration (22) est configurée pour injecter un signal de monitorage avec une première fréquence (F1) dans la ligne de transmission (36), le dispositif comprenant en outre une ou plus unité esclave (130) configurée pour générer un signal cohérent avec une seconde fréquence (F2) différente de la première fréquence (F1) et pour le transmettre à rebours le long de la ligne de transmission à l'unité d'élaboration (22).

6. Le dispositif de la revendication précédente, dans lequel l'unité d'élaboration (22) comprend des moyens pour générer un signal cohérent avec la seconde fréquence (F2).

7. Le dispositif de la revendication 1, dans lequel l'unité d'élaboration est configurée pour injecter un signal de monitorage ayant une fréquence variable (f(t)) dans la ligne de transmission (36), à travers un coupleur directionnel (35), détecter le coefficient de réflexion de phase du signal de monitorage par l'antenne (32) vu par le coupleur directionnel (35) par lequel le signal de monitorage est injecté, calculer le décalage de phase (a) entre les composantes directe et réfléchie à la position du coupleur directionnel the direct and reflected component at the position of the coupler directionnel (35) par lequel le signal de monitorage est injecté et/ou une longueur électrique de la ligne de transmission, et/ou un retard de la ligne de transmission, se basant sur un argument complexe du coefficient de réflexion de phase.

Fig. 1

Fig. 2

Fig. 3

Fig. 4

Fig. 5

Fig. 6

Fig. 7

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2346292 A
- WO 2016046600 A
- US 2013245976 A1
- US 2015118981 A1
- US 8410786 B1